# EUROPEAN PATENT SPECIFICATION

(11) **EP 1 621 921 B1**
(45) Date of publication and mention of the grant of the patent: **20.02.2008**
(21) Application number: 05106708.0
(22) Date of filing: 21.07.2005
(51) Int. Cl.: G02F 1/13357

(54) **Backlight display**
Anzeigeeinheit mit Rückbeleuchtung
Affichage à rétroéclairage

(30) Priority: 22.07.2004 KR 2004057040
(43) Date of publication of application: 01.02.2006
(73) Proprietor: Samsung Electronics Co., Ltd, Suwon-si, Gyeonggi-do 442-742 (KR)
(72) Inventor: Kim, Hak-yong Jugong Apt. 806-506, Gyeonggi-do (KR)
(74) Representative: Read, Matthew Charles

(56) References cited:
- GB-A- 2 247 977
- US-A1- 2002 024 803
- US-A1- 2004 120 161

## Description

The invention relates to a display apparatus, and more particularly, to a liquid crystal display (LCD) apparatus having a structure in which a supporter is provided between a surface light source and an optical sheet.

Generally, an LCD apparatus comprises an LCD panel operable to display an image, an optical sheet provided at the rear of the LCD panel, and a backlight unit arranged to illuminate the optical sheet and the LCD panel.

Backlight units are classified as direct or edge types according to their configuration. In a direct type backlight unit, a light source is disposed behind the optical sheet and emits light directly onto the optical sheet and the LCD panel. In an edge type backlight unit, light emitted by the light source is directed to the optical sheet and the LCD panel via a light guide.

A direct type LCD apparatus comprising a surface light source disposed behind the optical sheet and emitting light toward the LCD panel will now be described.

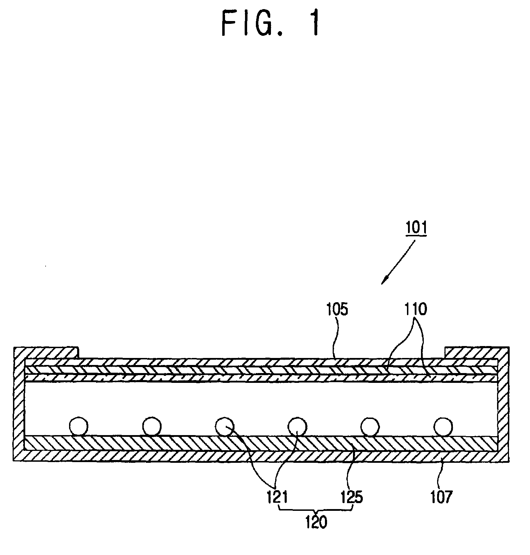

Figure 1 is a schematic section view of a conventional LCD apparatus comprising a surface light source. The conventional LCD apparatus 101 comprises an LCD panel 105, a plurality of optical sheets 110 provided at the rear of the LCD panel 105, to enhance the efficiency with which incident light is concentrated onto the LCD panel 105, a surface light source 120 disposed behind and spaced from the optical sheets, arranged to illuminate the LCD panel 105, and a mould frame 107 supporting the LCD panel 105, the surface light source 120, etc. The surface light source 120 comprises a plurality of lamps 121 disposed at regular intervals at the rear of the optical sheets 110 and a substrate 125 provided behind the lamps 121.

The surface light source 120 is disposed behind the optical sheets 110 and emits light onto the optical sheets 110, so that the light concentration efficiency of the surface light source 120 is enhanced, relative to that of the edge type LCD apparatus, thereby achieving a high brightness. There is a general trend for increasing the size of LCD apparatuses and surface light sources 120 are widely used in the larger sized LCD apparatuses.

The plurality of lamps 121 are disposed on the substrate 125 and spaced not only from each other but also from the optical sheets 110. However, in the conventional LCD apparatus, the surface light source 120 and the optical sheet 110 are spaced from each other. Thus, it is difficult to maintain a uniform distance between the surface light source 120 and the optical sheet 110 when they are assembled into the LCD apparatus. Furthermore, the larger the size of the LCD apparatus, the weaker the relative strength of the surface light source and the optical sheet. Therefore, the surface light source and the optical sheet need to be stably supported.

Other examples of prior display apparatuses include that disclosed in US 2004/0120161 A1, in which an elastic device, such as a spring, is provided between a surface light source and diffuser in order to reduce deformation of the diffuser. In another example of the prior art, US 2002/0024803 A1, a light-guiding plate is provided, comprising grooves for accommodating a plurality of bar-shaped lamps and other recessed formations for guiding light emitted by the lamps towards a light diffusion means.

One object of the present invention is the provision of an LCD apparatus having an improved structure which stably supports a surface light source and an optical sheet.

According to a first aspect of the invention, a display apparatus comprises a display panel, an optical sheet located behind the display panel, a surface light source arranged to illuminate the display panel through the optical sheet, the surface light source comprising a plurality of light source elements, and a supporter in the form of a light transmissive plate extending between, and arranged to support, the optical sheet and surface light source and comprising a plurality of recesses, wherein the surface light source comprises protruding portions providing discharge spaces for electrodes of the light source elements and the plurality of recesses is arranged to accommodate said protruding portions.

By supporting the optical sheet and surface light source in this manner, the risk of mechanical weakening of these components and effects such as bending of the optical sheet can be reduced. This is particularly advantageous in display apparatuses of increased size where the areas of the surface light source and optical sheet are large in comparison to their thickness.

The supporter may be arranged to act on the light emitted by the surface light source to ensure that the optical sheet is uniformly illuminated. For example, the supporter may be arranged to diffuse light emitted by the surface light source unit.

The surface light source may comprise an upper plate formed with the plurality of protruding portions protruding toward the rear of the optical sheets, and a lower plate coupled to the upper plate and forming a discharging space between the protruding portion and the lower plate.

The supporter may comprise a plurality of surface light source supporting portions formed between the respective accommodating portions and contacting the upper plate between the respective protruding portions.

The surface light source may be attached to the upper plate between the respective protruding portions.

The surface light source supporting portion may be attached to the plate between the respective protruding portions.

The supporter may comprise PMMA material.

The above and/or other aspects and advantages of the present invention will become apparent and more readily appreciated from the following description of example embodiments, in conjunction with the accompany drawings, which:
Figure 1 is a schematic section view of a conventional LCD apparatus;
Figure 2 is a schematic section view of an LCD apparatus according to an embodiment of the present invention; and
Figure 3 is a partially enlarged perspective view of the LCD apparatus of Figure 2.

Reference will now be made in detail to an embodiment of the present invention, examples of which are illustrated in the accompanying drawings, wherein like reference numerals refer to like elements throughout.

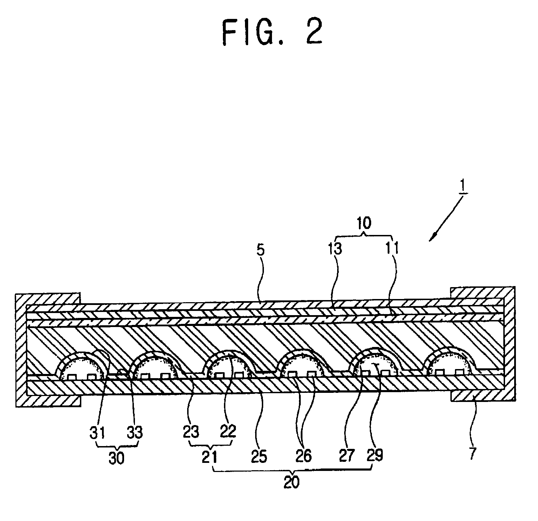

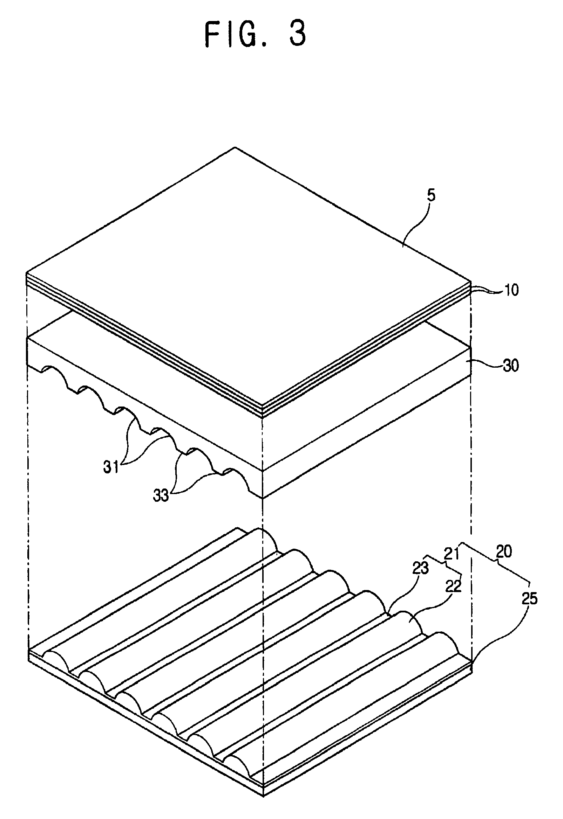

As shown in Figures 2 and 3, an LCD apparatus 1 according to an embodiment of the present invention comprises an LCD panel 5, operable to display an image thereon, an optical sheet 10 disposed at a rear of the LCD panel 5, a surface light source 20 spaced from the rear of the optical sheet 10 and arranged to illuminate the LCD panel 5, a frame 7 provided outside both the LCD panel 5 and the surface light source 20 and supporting the LCD panel 5 and the surface light source 20 and a supporter 30 provided between the optical sheet 10 and the surface light source 20 and arranged to support the optical sheet 10 and the surface light source 20.

The LCD panel 5 comprises a pair of substrates (not shown) and a liquid crystal (not shown) sandwiched between the substrates. When a voltage is applied between the pair of substrates, the molecular arrangement of the liquid crystal is altered and thus the transmission of light emitted by the surface light source 20 is adjusted, thereby forming an image.

The optical sheet 10 comprises a plurality of sheets to enhance concentration efficiency of the light emitted by the surface light source 20 illuminating the LCD panel 5. That is, the optical sheets 10 comprise a plurality of diffusion sheets 11 to diffuse the light emitted from the surface light source 20 and make it uniform, a prism sheet 13 to change the optical path of the light diffused by the diffusion sheet 11 at a predetermined angle, etc.

The frame 7 supports the LCD panel 5, the optical sheets 10, the surface light source 20, etc.

The surface light source 20 comprises an upper plate 21, formed with a plurality of protruding portions 22 spaced from one another, and a lower plate 25 coupled to the upper plate 21 so that a discharging space 29 between the protruding portion 22 and the lower plate 25 is provided. Furthermore, the surface light source 20 comprises a fluorescent layer 27 coated onto an inner wall of the protruding portion 22 or onto the lower plate 25.

The surface light source 20 also includes electrodes 26, arranged to provide a discharge in the discharging space 29. The electrodes 26 are preferably provided in the lower plate 25, but may be provided in the upper plate 21.

The discharging space 29 is filled with inert gas such as mercury (Hg) gas, argon (Ar) gas, or the like. The inert gas is discharged when voltage is applied between the electrodes 26, thereby generating ultraviolet (UV) rays.

The fluorescent layer 27 absorbs the ultraviolet rays generated by the voltage applied between the electrodes 26 and transforms the ultraviolet rays into light in the visible waveband.

The electrodes 26 create a plasma discharge in the discharging space 29 when voltage is applied therebetween. The ultraviolet rays resulting from the plasma discharge excite the fluorescent layer 27 to generate visible light, thereby emitting light.

The upper plate 21 is made of a glass material so that light can travel from the discharging space 29 toward the optical sheet 10 through the upper plate 21. The upper plate 21 is also provided with a contact-supporting portion 23, located between the protruding portions 22, in order to contact a surface light source supporting portion 33 of the supporter 30 (to be described later).

In this example, each of the protruding portions 22 is longitudinally formed in the upper plate 21 and has a semi-elliptical section. Alternatively, the protruding portion 22 may have a semicircular section, a rectangular section, a triangular section, or the like.

The contact-supporting portion 23 has a bottom surface contact-coupled to an upper surface of the lower plate 25 and a top surface contact-coupled to the surface light source supporting portion 33 of the supporter 30. In this particular embodiment, the bottom and top surfaces of the contact-supporting portion 23 are attached to the lower plate 25 and the surface light source supporting portion 33 by an adhesive. However, other suitable attachment means, such as a double sided tape, a screw, a bolt or the like, could be used instead of, or as well as, such an adhesive.

The lower plate 25 is a flat glass plate. Furthermore, the lower plate 25 can be provided with a reflecting sheet (not shown) to reflect light generated in the discharging space 29 toward the optical sheet 10.

The supporter 30 comprises a plurality of accommodating portions 31 configured to accommodate the plurality of protruding portions 22. The surface light source supporting portion 33 is formed between the accommodating portions 31 and contacts the upper plate 21. The supporter 30 acts on the light emitted from the surface light source 20 to ensure that the light incident on the optical sheet 10 is uniform. The supporter 30 is made of PMMA (polymethylmethacrylate) material or the like, which has excellent diffusion and transmissivity properties, so that the supporter 30 can function as a light guide plate. A top surface of the supporter 30 is flat so that it corresponds to the shape of the optical sheet 10. Furthermore, the top surface of the supporter 30 can contact and support the optical sheet 10 so as to prevent the optical sheet 10 from bending toward the surface light source 20.

The accommodating portions 31 are shaped corresponding to the shape of the protruding portions 22. The accommodating portions 31 can be spaced from the protruding portions 22 or, alternatively, be in contact with the accommodated protruding portions 22. The accommodating portions 31 can have a semi-elliptical section corresponding to the shape of the protruding portion 22. Alternatively, an accommodating portion 31 may have another form, such as a semicircular section, a rectangular section or the like, as long as it is capable of accommodating the corresponding protruding portion 22.

The surface light source supporting portion 33 is attached to the upper plate 21 between the respective protruding portions 22. That is, the surface light source supporting portion 33 is located between the accommodating portions 31 and attached to the contact-supporting portion 23 of the upper plate 21, so that the supporter 30 supports the surface light source 20. The surface light source supporting portion 33 is attached to the contact-supporting portion 23 by an adhesive or the like.

A process of assembling the LCD apparatus 1 according to the embodiment will now be described.

Firstly, a surface light source 20, formed with the plurality of protruding portions 22, and a supporter 30, formed with the plurality of accommodating portions 31 to accommodate the respective protruding portion 22, are provided. Then, the supporter 30 is mounted on the surface light source 20. That is, the protruding portion 22 of the surface light source 20 is accommodated in the accommodating portion 31 of the supporter 30 and the surface light source supporting portion 33 of the supporter 30 is placed in contact with the contact-supporting portion 23 of the surface light source 20. In this particular example, an adhesive is applied between the surface light source supporting portion 33 and the contact-supporting portion 23, so that the surface light source supporting portion 33 and the contact-supporting portion 23 are attached, thereby attaching the supporter 30 to the surface light source 20. Thereafter, a plurality of optical sheets 10 and a LCD panel 5 are mounted on the supporter 30, and the frame 7 is attached to them.

Thus, the LCD apparatus 1 according to the embodiment of the invention comprises the supporter 30 provided between the optical sheet 10 and the surface light source 20 and supporting the optical sheet 10 and the surface light source 20, thereby keeping a distance between the surface light source 20 and the optical sheet 10 uniform when they are assembled into the LCD apparatus 1. This arrangement is particularly advantageous in LCD apparatuses where the area of the surface light source 20 and the optical sheet 10 is large relative to their thickness, in accordance with the general trend for LCD apparatuses of increasing size. The supporter stably supports the surface light source 20 and the optical sheet 10 to prevent mechanical weakening of the surface light source 20 and the optical sheet 10. Furthermore, the supporter 30 can act on the light emitted from the surface light source 20 so that the light incident on the optical sheet 10 is uniform. In this manner, the supporter 30 may function as a light guide plate, defining a lenticular lens arrangement around the light source elements of the surface light source 20 that are provided by the pairs of electrodes 26 and discharging space 29.

As described above, the LCD apparatus 1 of the embodiment can be easily assembled and can stably support a surface light source 20 and an optical sheet 10 even where the LCD apparatus 1 is of increased size.

Furthermore, the supporter 30 in the embodiment functions as a light guide plate, making the light emitted from the surface light source 20 towards the optical sheet 10 uniform.

Although an example embodiment of the present invention has been shown and described, it will be appreciated by those skilled in the art that changes may be made in this embodiment without departing from the principles of the invention, the scope of which is defined in the appended claims.

## Claims

1. A display apparatus (1, 1a) comprising:
a display panel (5);
an optical sheet (10) located behind the display panel (5); and
a surface light source (20) arranged to illuminate the display panel (5) through the optical sheet (10), the surface light source (20) comprising a plurality of light source elements; and
a supporter (30), in the form of a light transmissive plate extending between, and arranged to support, the optical sheet (10) and surface light source (20) and comprising a plurality of recesses (31);
**characterised by**:
the surface light source (20) comprising protruding portions (22) providing discharge spaces (29) for electrodes (26) of the light source elements; and
said plurality of recesses (31) being arranged to accommodate said protruding portions (22).

2. A display apparatus (1) according to claim 1, wherein said supporter (30) is arranged to act on the light emitted by the surface light source (20) to ensure that the optical sheet (10) is uniformly illuminated.

3. A display apparatus (1) according to claim 2, wherein said supporter (30) defines a plurality of lens elements for directing light from the surface light source (20) to the display panel (5).

4. A display apparatus (1) according to claim 1, 2 or 3, wherein the surface light source (20) comprises an upper plate (21) formed with said plurality of protruding portions (22) protruding toward the optical sheets (10), and a lower plate (25) coupled to the upper plate (21) to provide said discharge spaces (29) between the protruding portions (22) and the lower plate (25).

5. A display apparatus (1) according to claim 4, wherein the light guide plate (30) comprises a plurality of surface light source supporting portions (33) provided between the recesses (31), wherein the plurality of surface light source supporting portions contact the upper plate (21) between the protruding portions (22).

6. A display apparatus (1) according to claim 5, wherein the lower plate (25) is attached to the upper plate (21) between the protruding portions (22).

7. A display apparatus (1) according to claim 3, wherein the supporter (30) uniformizes the light emitted from the surface light source (20) towards the optical sheet (10).

8. A display apparatus according to any one of the preceding claims, wherein the supporter (30) includes PMMA material.

9. A display apparatus according to claim 5, wherein the recesses (31) are concave shaped.

10. A display apparatus according to claim 5, wherein the protruding portions (22) are convex shaped.

11. A display apparatus according to claim 1, further including a frame (7) that engages an outer portion of the display panel (5) and an outer portion of the surface light source (20).

## Patentansprüche

1. Anzeigevorrichtung (1, 1a), umfassend:
ein Anzeigefeld (5);
eine hinter dem Anzeigefeld (5) liegende optische Schicht (10); und
eine Flächenlichtquelle (20), die dafür eingerichtet ist, das Anzeigefeld (5) durch die optische Schicht (10) hindurch zu beleuchten, wobei die Flächenlichtquelle (20) eine Vielzahl von Lichtquellenelementen umfasst; und
einen Träger (30) in Form einer lichtdurchlässigen Platte, die sich zwischen der optischen Schicht (10) und der Flächenlichtquelle (20) erstreckt und dafür eingerichtet ist, diese zu tragen, und eine Vielzahl von Aussparungen (31) umfasst;
**dadurch gekennzeichnet, dass**:
die Flächenlichtquelle (20) vorstehende Abschnitte (22) umfasst, die Entladungsräume (29) für Elektroden (26) der Lichtquellenelemente bereitstellen; und
die Vielzahl von Aussparungen (31) dafür eingerichtet sind, die vorstehenden Abschnitte (22) aufzunehmen.

2. Anzeigevorrichtung (1) gemäß Anspruch 1, wobei der Träger (30) dafür eingerichtet ist, auf das von der Flächenlichtquelle (20) emittierte Licht einzuwirken, um sicherzustellen, dass die optische Schicht (10) gleichförmig beleuchtet wird.

3. Anzeigevorrichtung (1) gemäß Anspruch 2, wobei der Träger (30) eine Vielzahl von Linsenelementen zum Lenken von Licht von der Flächenlichtquelle (20) zu dem Anzeigefeld (5) definiert.

4. Anzeigevorrichtung (1) gemäß Anspruch 1, 2 oder 3, wobei die Flächenlichtquelle (20) eine obere Platte (21), die mit der Vielzahl von vorstehenden Abschnitten (22) ausgebildet ist, die in Richtung auf die optischen Schichten (10) vorstehen, und eine untere Platte (25) umfasst, die mit der oberen Platte (21) gekoppelt ist, um die Entladungsräume (29) zwischen den vorstehenden Abschnitten (22) und der unteren Platte (25) bereitzustellen.

5. Anzeigevorrichtung (1) gemäß Anspruch 4, wobei die Lichtführungsplatte (30) eine Vielzahl von Flächenlichtquellen-Tragabschnitten (33) umfasst, die zwischen den Aussparungen (31) vorgesehen sind, wobei die Vielzahl von Flächenlichtquellen-Tragabschnitten die obere Platte (21) zwischen den vorstehenden Abschnitten (22) berühren.

6. Anzeigevorrichtung (1) gemäß Anspruch 5, wobei die untere Platte (25) zwischen den vorstehenden Abschnitten (22) an der oberen Platte (21) befestigt ist.

7. Anzeigevorrichtung (1) gemäß Anspruch 3, wobei der Träger (30) das von der Flächenlichtquelle (20) in Richtung auf die optische Schicht (10) emittierte Licht vergleichmäßigt.

8. Anzeigevorrichtung gemäß einem der vorhergehenden Ansprüche, wobei der Träger (30) PMMA-Material enthält.

9. Anzeigevorrichtung gemäß Anspruch 5, wobei die Aussparungen (31) konkav geformt sind.

10. Anzeigevorrichtung gemäß Anspruch 5, wobei die vorstehenden Abschnitte (22) konvex geformt sind.

11. Anzeigevorrichtung gemäß Anspruch 1, die weiterhin einen Rahmen (7) enthält, der an einem äußeren Abschnitt des Anzeigefeldes (5) und einem äußeren Abschnitt der Flächenlichtquelle (20) angreift.

## Revendications

1. Dispositif d' affichage (1, 1a) comportant :
un panneau d'affichage (5) ;
une feuille optique (10), localisée derrière le panneau d'affichage (5) ; et
une source de lumière de surface (20) agencée de manière à éclairer le panneau d'affichage (5) par l'intermédiaire de la feuille optique (10), la source de lumière de surface (20) comportant une pluralité d'éléments de source de lumière ; et
un support (30), sous la forme d'une plaque émettrice de lumière s'étendant entre, et agencée en vue de prendre en charge, la feuille optique (10) et la source de lumière de surface (20) et comportant une pluralité d'évidements (31) ;
**caractérisé en ce que** :
la source de lumière de surface (20) comportant des parties en saillie (22) fournissant des espaces de décharge (29) pour des électrodes (26) des éléments de source de lumière ; et
ladite pluralité d'évidements (31) étant agencée en vue d'accueillir lesdites parties en saillie (22).

2. Dispositif d'affichage (1) selon la revendication 1, dans lequel ledit support (30) est agencé en vue d'agir sur la lumière émise par la source de lumière de surface (20) afin d'assurer que la feuille optique (10) est uniformément éclairée.

3. Dispositif d'affichage (1) selon la revendication 2, dans lequel ledit support (30) définit une pluralité d'éléments de lentille en vue de diriger de la lumière de la source de lumière de surface (20) au panneau d'affichage (5).

4. Dispositif d'affichage (1) selon la revendication 1, 2 ou 3, dans lequel la source de lumière de surface (20) comporte une plaque supérieure (21) formée avec ladite pluralité de parties en saillie (22) s'étendant en saillie vers les feuilles optiques (10), et une plaque inférieure (25) couplée à la plaque supérieure (21) en vue de fournir lesdits espaces de décharge (29) entre les parties en saillie (22) et la plaque inférieure (25).

5. Dispositif d'affichage (1) selon la revendication 4, dans lequel la plaque de guide de lumière (30) comporte une pluralité de parties de support de source de lumière de surface (33) délivrée entre les évidements (31), dans lequel la pluralité de parties de support de source de lumière de surface entre en contact avec la plaque supérieure (21) entre les parties en saillie (22).

6. Dispositif d'affichage (1) selon la revendication 5, dans lequel la plaque inférieure (25) est fixée à la plaque supérieure (21) entre les parties en saillie (22).

7. Dispositif d'affichage (1) selon la revendication 3, dans lequel le support (30) uniformise la lumière émise de la source de lumière de surface (20) vers la feuille optique (10).

8. Dispositif d'affichage selon l'une quelconque des revendications précédentes, dans lequel le support (30) comporte un matériau en polyméthacrylate de méthyle (PMMA).

9. Dispositif d'affichage selon la revendication 5, dans lequel les évidements (31) sont de forme concave.

10. Dispositif d'affichage selon la revendication 5, dans lequel les parties en saillie (22) sont de forme convexe.

11. Dispositif d'affichage selon la revendication 1, comportant en outre un cadre (7) qui vient en contact avec une partie extérieure du panneau d'affichage (5) et une partie extérieure de la source de lumière de surface (20).
